(19) Europäisches Patentamt / European Patent Office / Office européen des brevets

(11) **EP 3 708 611 A1**

(12) **EUROPEAN PATENT APPLICATION**
published in accordance with Art. 153(4) EPC

(43) Date of publication:
**16.09.2020 Bulletin 2020/38**

(21) Application number: **18876183.7**

(22) Date of filing: **08.11.2018**

(51) Int Cl.:
*C08L 23/16* (2006.01)    *C08K 3/06* (2006.01)
*F16L 11/08* (2006.01)

(86) International application number:
**PCT/JP2018/041560**

(87) International publication number:
**WO 2019/093445 (16.05.2019 Gazette 2019/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.11.2017   JP 2017217349**

(71) Applicant: **The Yokohama Rubber Co., Ltd.
Minato-ku
Tokyo 105-8685 (JP)**

(72) Inventor: **SUGIHARA, Koki
Hiratsuka City
Kanagawa 254-8601 (JP)**

(74) Representative: **Grünecker Patent- und
Rechtsanwälte
PartG mbB
Leopoldstraße 4
80802 München (DE)**

(54)    **RUBBER COMPOSITION, AND HOSE**

(57)    The present invention is to provide a rubber composition exhibiting excellent heat resistance, dimensional stability, and workability, and a hose. The present invention includes a rubber composition containing an ethylene-propylene-diene copolymer (A) containing an ethylene-propylene-diene copolymer (a1) obtained by using a metallocene catalyst, an ethylene-propylene copolymer having a weight average molecular weight of 35000 or less, and sulfur; and a hose formed by using the rubber composition.

FIG. 1

EP 3 708 611 A1

**Description**

Technical Field

The present invention relates to a rubber composition and a hose.

Background Art

In the related art, because of excellence in ozone resistance and weather resistance, an ethylene-propylene-diene copolymer (hereinafter, also referred to as "EPDM") has been used in, for example, an outer layer of an air conditioner (AC) hose for an automobile.

In recent years, slimming has been required in an engine of an automobile. Furthermore, a turbocharger has been introduced in an engine. Due to such slimming and introduction of a turbocharger in an engine, the space in the engine room becomes smaller at a higher temperature, and thus heat resistance has been further required, compared to before, for an air conditioner (AC) hose for an automobile.

Meanwhile, to provide a long-life heat resistant belt having excellent required performances, such as heat aging resistance, roll workability, molding adhesion workability, and wear resistance, among heat resistant belts formed from a rubber reinforced by a reinforcing material, a heat resistant belt has been proposed which is formed by vulcanizing a rubber composition containing, as polymer main components of the rubber, an ethylene-$\alpha$-olefin copolymer and/or an ethylene-$\alpha$-olefin-diene copolymer, and the weight loss percentage after this vulcanized rubber is heated at 180°C for 14 days is 4% or less (Patent Document 1). Patent Document 1 describes an organic peroxide as a vulcanizing agent.

Citation List

Patent Literature

Patent Document 1: JP 11-292236 A

Summary of Invention

Technical Problem

In such circumstances, the inventor of the present invention prepared a rubber composition that uses an organic peroxide as a vulcanizing agent using Patent Document 1 as a reference. It was thus found that, when an outer covering agent, which is for covering an outer surface of a rubber composition during molding of the rubber composition, is repeatedly used for the rubber composition, dimensional stability of a product obtained by the rubber composition may be low (Comparative Example 4). Furthermore, it was found that such a rubber composition may exhibit poor workability (Comparative Example 4).

Furthermore, it was found that a rubber composition containing an EPDM obtained by using a vanadium catalyst (note that the vanadium catalyst corresponds to a catalyst other than the metallocene catalyst) cannot satisfy heat resistance that is required recently and may exhibit poor workability (Comparative Example 1).

An object of the present invention is to provide a rubber composition exhibiting excellent heat resistance, dimensional stability, and workability.

Another object of the present invention is to provide a hose.

Solution to Problem

As a result of diligent research to solve the problems described above, the inventor of the present invention found that a desired effect can be achieved when an ethylene-propylene-diene copolymer (A) containing an ethylene-propylene-diene copolymer (a1) obtained by using a metallocene catalyst, an ethylene-propylene copolymer having a weight average molecular weight of 35000 or less, and sulfur are contained, and thus completed the present invention.

The present invention is based on the findings described above and, specifically, solves the problem described above by the following features.

[1] A rubber composition containing:

an ethylene-propylene-diene copolymer (A) containing an ethylene-propylene-diene copolymer (a1) obtained by using a metallocene catalyst;
an ethylene-propylene copolymer having a weight average molecular weight of 35000 or less; and
sulfur.

[2] The rubber composition according to [1], where a content of the ethylene-propylene copolymer is from 5 to 30 parts by mass per 100 parts by mass of the ethylene-propylene-diene copolymer (A).
[3] The rubber composition according to [1] or [2], further containing a plasticizer,
a content of the plasticizer being 15 parts by mass or greater per 100 parts by mass of the ethylene-propylene-diene copolymer (A).
[4] The rubber composition according to any one of [1] to [3], where a content of a diene repeating unit constituting the ethylene-propylene-diene copolymer (a1) is 8 mass% or less of an amount of the ethylene-propylene-diene copolymer (a1).
[5] The rubber composition according to any one of [1] to [4], where a content of an ethylene repeating unit constituting the ethylene-propylene-diene copolymer (a1) is greater than 60 mass% of the amount of the ethylene-propylene-diene copolymer (a1).
[6] The rubber composition according to any one of [1] to [5], where the weight average molecular weight of the ethylene-propylene copolymer is from 5000 to 25000.
[7] The rubber composition according to any one of [1] to [6], where a content of the sulfur is from 0.3 to 1.5 parts by mass per 100 parts by mass of the ethylene-propylene-diene copolymer (A).
[8] The rubber composition according to any one of [1] to [7], where a content of the ethylene-propylene-diene copolymer (a1) in 100 parts by mass of the ethylene-propylene-diene copolymer (A) is from 40 to 100 mass%.
[9] The rubber composition according to any one of [1] to [8], where the rubber composition is used for a hose.
[10] A hose formed by using the rubber composition described in any one of [1] to [9].

Advantageous Effects of Invention

The rubber composition and the hose according to embodiments of the present invention exhibit excellent heat resistance, dimensional stability, and workability.

Brief Description of Drawings

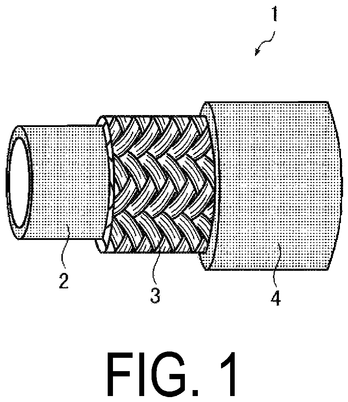

FIG. 1 is a perspective view illustrating a cut-away of each layer for an example of an embodiment of the hose of the present invention.

Description of Embodiments

Embodiments of the present invention will be described in detail below.
Note that in the present specification, numerical ranges indicated using "(from) ... to ..." include the former number as the lower limit value and the latter number as the upper limit value.
In the present specification, unless otherwise noted, a single corresponding substance may be used for each component, or a combination of two or more types of corresponding substances may be used for each component. When a component contains two or more types of substances, the content of the component means the total content of the two or more types of substances.
The production methods for the components in the present specification are not particularly limited unless otherwise noted. Examples thereof include known methods.
In the present specification, the ethylene-propylene-diene copolymer (A) may be referred to as the EPDM (A), the ethylene-propylene-diene copolymer (a1) may be referred to as the EPDM (a1), and the ethylene-propylene-diene copolymer (a2) may be referred to as the EPDM (a2). Furthermore, the ethylene-propylene copolymer may be referred to as the EPM.

Rubber composition

The rubber composition according to an embodiment of the present invention (the composition according to an embodiment of the present invention) is
a rubber composition containing
an ethylene-propylene-diene copolymer (A) containing an ethylene-propylene-diene copolymer (a1) obtained by using a metallocene catalyst;
an ethylene-propylene copolymer having a weight average molecular weight of 35000 or less; and

sulfur.

The composition according to an embodiment of the present invention is thought to achieve desired effects as a result of having such a configuration. Although the reason is not clear, it is assumed to be as follows.

An example of the production method of a hose is a method of producing a hose by forming an unvulcanized hose by processing a rubber composition into a tube shape, covering an outer surface of the unvulcanized hose with an outer covering agent and vulcanizing, and releasing the outer covering material from the outer surface of the hose after the vulcanization.

Meanwhile, the outer covering agent after released is reused for covering an outer surface of an unvulcanized hose.

As described above, the outer covering agent is repeatedly used in production of hoses.

The inventor of the present invention found that, when a hose is produced, in the case where an outer covering agent is used for an outer surface of an unvulcanized hose obtained by using a rubber composition containing an organic peroxide as a vulcanizing agent (or a crosslinking agent), dimensional stability of the resulting hose is poor.

The inventor of the present invention presumes that this is because the organic peroxide transfers to the outer covering agent from the rubber composition or the organic peroxide is brought into contact with the outer covering agent and the organic peroxide thus makes the outer covering agent deteriorated.

Meanwhile, the inventor of the present invention found that, when a hose is produced, in the case where an outer covering agent is used for an outer surface of an unvulcanized hose obtained by using a rubber composition containing sulfur as a vulcanizing agent, excellent dimensional stability of the resulting hose is achieved (the outer covering agent does not deteriorate even when the outer covering agent is used repeatedly, and thus the dimension of the hose can be stably maintained).

It is conceived that this is because the outer surface is not deteriorated by the sulfur.

Furthermore, it is conceived that the composition according to an embodiment of the present invention achieves excellent heat resistance and workability because the composition contains a predetermined EPDM (a1) and an EPM having a predetermined range of weight average molecular weight.

Each of the components included in the composition according to an embodiment of the present invention will be described in detail below.

Ethylene-propylene-diene copolymer (A)

The ethylene-propylene-diene copolymer (A) contained in the composition according to an embodiment of the present invention contains an ethylene-propylene-diene copolymer (a1) obtained by using a metallocene catalyst.

The EPDM (A) is a copolymer of ethylene, propylene, and diene.

Examples of the diene constituting the EPDM (A) include non-conjugated diene compounds.

Specific examples of the non-conjugated diene compound include dicyclopentadiene (DCPD); ethylidene norbornene, such as 5-ethylidene-2-norbornene (ENB); and 1,4-hexadiene (HD).

A part or all of the EPDM (A) can be an EPDM (a1) described below.

Ethylene-propylene-diene copolymer (a1)

The ethylene-propylene-diene copolymer (a1) contained in the composition according to an embodiment of the present invention is a copolymer of ethylene, propylene, and diene obtained by using a metallocene catalyst.

The composition according to an embodiment of the present invention achieves excellent heat resistance by allowing the EPDM (a1) to be contained.

The EPDM (a1) is not particularly limited as long as the EPDM (a1) is a polymer formed from ethylene, propylene, and diene, in the presence of a metallocene catalyst.

• Metallocene catalyst

In an embodiment of the present invention, the metallocene catalyst is not particularly limited as long as the metallocene catalyst can polymerize olefin.

In general, a metallocene catalyst refers to an organometallic complex that has a vacant coordination site to which olefin can be coordinated and olefin can be inserted and polymerized.

The term "metallocene" means a compound having M, which is a transition metal of the groups III to VI of the periodic table, a lanthanide metal, or an actinide metal, one or two or more cyclopentadienyl (Cp) ligand(s) (single or plural) that may be substituted, and at least one non-cyclopentadienyl derivative ligand X or zero or one heteroatom-containing ligand Y; the ligand coordinating with M, and the number of ligands corresponding to the valence of M.

The metallocene catalyst is not particularly limited. Examples thereof include known metallocene catalysts.

The metallocene catalyst can be used together with a co-catalyst (activator), such as an organoaluminum compound.

• Diene

The diene constituting the EPDM (a1) is the same as that described above.
From the perspectives of achieving superior heat resistance, workability, or dimensional stability and achieving excellent mechanical properties, the diene preferably at least contains ethylidene norbornene (ENB).

• Mooney viscosity

From the perspectives of achieving superior heat resistance, workability, or dimensional stability and achieving excellent workability, the Mooney viscosity of the EPDM (a1) is preferably from 30 to 90, more preferably from 60 to 80, and even more preferably from 70 to 75.
In an embodiment of the present invention, the Mooney viscosity of the EPDM can be measured in accordance with ASTM D1646. The Mooney viscosity is a Mooney viscosity at 125°C.

• Diene amount

From the perspective of achieving superior heat resistance, workability, or dimensional stability, the content (diene amount) of the diene repeating unit constituting the EPDM (a1) is preferably 8 mass% or less, and more preferably from 2 to 6 mass%, of the amount of the EPDM (a1).
Note that the diene amount of the EPDM (a1) can be a mass percentage relative to the amount of the entire EPDM (a1) or the total amount of all the repeating units constituting the EPDM (a1).
In an embodiment of the present invention, the diene amount of the EPDM can be measured in accordance with ASTM D6047.

• Ethylene amount

From the perspectives of achieving superior heat resistance, workability, or dimensional stability and achieving excellent green properties and/or mechanical strength, the content (ethylene amount) of the ethylene repeating unit constituting the EPDM (a1) is preferably greater than 60 mass%, and more preferably greater than 60 mass% but 80 mass% or less, of the amount of the EPDM (a1).
Note that the ethylene amount of the EPDM (a1) can be a mass percentage relative to the amount of the entire EPDM (a1) or the total amount of all the repeating units constituting the EPDM (a1).
In an embodiment of the present invention, the ethylene amount of the EPDM can be measured in accordance with ASTM D3900 METHOD A.

• Propylene amount

The content of the propylene repeating unit constituting the EPDM (a1) is an amount obtained by subtracting the diene amount and the ethylene amount from 100 mass%.

EPDM (a2) other than EPDM (a1)

The EPDM (A) may further contain an EPDM (a2) other than the EPDM (a1) described above.
Examples of the EPDM (a2) include an ethylene-propylene-diene copolymer obtained by using a catalyst other than the metallocene catalyst.
The catalyst other than the metallocene catalyst is not particularly limited. Examples thereof include known catalysts. Specific examples thereof include Ziegler-Natta catalysts.
Examples of the Ziegler-Natta catalyst include titanium catalysts, vanadium catalysts, and zirconium catalysts.
As the Ziegler-Natta catalyst, an example of a preferable aspect is a vanadium catalyst.
In general, examples of the catalyst for EPDM formation include metallocene catalysts, Ziegler-Natta catalysts, and vanadium catalysts.
For the catalyst for EPDM formation, for example, vanadium catalysts are usually considered to not belong to metallocene catalysts. Note that the vanadium catalyst as a catalyst for the EPDM formation may be a Ziegler-Natta catalyst or may be a catalyst other than the metallocene catalyst and the Ziegler-Natta catalyst.
Note that, in the present specification, it is possible that the catalyst other than the metallocene catalyst is not a complex.

Examples of the vanadium catalyst as the Ziegler-Natta catalyst include $VOCl_3(acac)_3$ (acac represents acetyl acetonate), vanadium trisacetylacetonate, vanadium trichloride, vanadium tetrachloride, and vanadium oxytrichloride ($VOCl_3$).

The vanadium catalyst can be used together with, for example, an organoaluminum-based co-catalyst, such as diethylaluminum chloride (DEAC), ethylaluminum sesquichloride (EASC), or ethylaluminum dichloride (EADC); and/or an activator.

• Mooney viscosity

From the perspectives of achieving superior heat resistance, workability, or dimensional stability and achieving excellent workability, the Mooney viscosity of the EPDM (a2) is preferably less than 60, and more preferably 30 or greater but less than 60.

• Diene amount

From the perspective of achieving superior heat resistance, workability, or dimensional stability, the content (diene amount) of the diene repeating unit constituting the EPDM (a2) is preferably 15 mass% or less, and more preferably greater than 8 mass% but 12 mass% or less, of the amount of the EPDM (a2).

Note that the diene amount of the EPDM (a2) can be a mass percentage relative to the amount of the entire EPDM (a2) or the total amount of all the repeating units constituting the EPDM (a2).

• Ethylene amount

From the perspective of achieving superior heat resistance, workability, or dimensional stability, the content (ethylene amount) of the ethylene repeating unit constituting the EPDM (a2) is preferably from 40 to 60 mass% of the amount of the EPDM (a2).

Note that the ethylene amount of the EPDM (a2) can be a mass percentage relative to the amount of the entire EPDM (a2) or the total amount of all the repeating units constituting the EPDM (a2).

• Propylene amount

The content of the propylene repeating unit constituting the EPDM (a2) is an amount obtained by subtracting the diene amount and the ethylene amount from 100 mass%.

Content of EPDM (a1)

From the perspective of achieving superior heat resistance, the content of the EPDM (a1) is preferably from 40 to 100 mass%, more preferably from 50 to 100 mass%, and even more preferably from 80 to 100 mass%, relative to 100 parts by mass of the ethylene-propylene-diene copolymer (A).

Content of EPDM (a2)

In the case where the EPDM (A) uses the EPDM (a1) and the EPDM (a2) together, the content of the EPDM (a2) is an amount obtained by subtracting the content of the EPDM (a1) from the entire amount of the EPDM (A).

Ethylene-propylene copolymer

The ethylene-propylene copolymer (EPM) contained in the composition according to an embodiment of the present invention is a copolymer of ethylene and propylene, and the weight average molecular weight thereof is 35000 or less.

The composition according to an embodiment of the present invention achieves excellent workability or heat resistance by allowing the EPM to be contained.

The EPM contained in the composition according to an embodiment of the present invention is not particularly limited except that the weight average molecular weight thereof is 35000 or less.

6

Weight average molecular weight of EPM

In an embodiment of the present invention, the weight average molecular weight of the EPM is 35000 or less.
From the perspectives of achieving superior heat resistance, workability, or dimensional stability and achieving excellent kneading workability, the weight average molecular weight of the EPM is preferably from 5000 to 25000, and more preferably from 15000 to 25000.
In an embodiment of the present invention, the weight average molecular weight of the EPM is a value measured by gel permeation chromatography (GPC), based on calibration with polystyrene standard.
The measurement conditions for the weight average molecular weight of the EPM are as described below.

- Measurement instrument: HLC-8020 (available from Tosoh Corporation)
- Column: GMH-HR-H (available from Tosoh Corporation), two connected in serial
- Detector: Differential refractometer RI-8020 (available from Tosoh Corporation)
- Eluent: Tetrahydrofuran
- Column temperature: 40°C

• Content of EPM

From the perspective of achieving superior workability, the content of the EPM is preferably from 5 to 30 parts by mass, more preferably from 7.5 to 30 parts by mass, and even more preferably from 10 to 20 parts by mass, per 100 parts by mass of the EPDM (A).
Furthermore, from the perspective of achieving superior heat resistance, the content of the EPM is preferably from 5 to 30 parts by mass, more preferably from 5 to 20 parts by mass, and even more preferably from 5 to 10 parts by mass, per 100 parts by mass of the EPDM (A).

Sulfur

The sulfur contained in the composition of an embodiment of the present invention is not particularly limited. Examples thereof include known substances.
By allowing the sulfur to be contained in the composition according to an embodiment of the present invention, sulfur vulcanization can be performed, the outer covering agent is not affected, and thus excellent dimensional workability and excellent heat resistance and workability are achieved. Excellent mechanical strength is also achieved.
From the perspective of achieving superior heat resistance, workability, or dimensional stability, the content of the sulfur is preferably from 0.3 to 1.5 parts by mass, and more preferably from 0.5 to 1.2 parts by mass, per 100 parts by mass of the EPDM (A).

Additives

The composition according to an embodiment of the present invention may further contain additives as necessary within a scope that does not impair the effect of the present invention.
Examples of the additive include rubbers other than the EPDM and the EPM, carbon black, zinc oxide, processing aids, vulcanization accelerator aids (e.g. stearic acid), anti-aging agents, vulcanization retarders, plasticizers, and vulcanization accelerators.

• Carbon black

The composition according to an embodiment of the present invention can further contain carbon black. The carbon black is not particularly limited. Examples thereof include known methods.
Examples of the carbon black include
Fast Extruding Furnace (FEF) carbon black,
General Purpose Furnace (GPF) carbon black, and
Semi-Reinforcing Furnace (SRF) carbon black.
Among these, from the perspectives of achieving excellent mechanical strength and compression set, GPF carbon black is preferred.
From the perspectives of achieving excellent mechanical strength and compression set, the content of the carbon black is preferably from 60 to 120 parts by mass, and more preferably from 70 to 110 parts by mass, per 100 parts by mass of the EPDM (A).

• Plasticizer

The composition according to an embodiment of the present invention can further contain a plasticizer.

In the case where the composition according to an embodiment of the present invention further contains a plasticizer, excellent processability is achieved.

Note that the plasticizer does not include the EPM.

The plasticizer is not particularly limited. Examples of the plasticizer include naphthenic oils, paraffin oils, aroma oils, adipates, phthalates, and phosphates.

From the perspective of achieving superior workability, the content of the plasticizer is preferably 15 parts by mass or greater, and more preferably from 15 to 35 parts by mass, per 100 parts by mass of the EPDM (A).

• Vulcanization accelerator

The composition according to an embodiment of the present invention can further contain a vulcanization accelerator.

The vulcanization accelerator is not particularly limited. Examples of the vulcanization accelerator include thiuram-based vulcanization accelerators, thiazole-based vulcanization accelerators, sulfenamide-based vulcanization accelerators, guanidine-based vulcanization accelerators, and alkylphenyldithiocarbamate-based vulcanization accelerators.

The vulcanization accelerator can at least contain a thiuram-based vulcanization accelerator and/or a thiazole-based vulcanization accelerator.

Examples of the thiuram-based vulcanization accelerator include tetramethylthiuram disulfide, tetraethylthiuram disulfide, tetrabutylthiuram disulfide, tetrabenzylthiuram disulfide, tetrakis(2-ethylhexyl)thiuram disulfide, tetramethylthiuram monosulfide, and dipentamethylenethiuram tetrasulfide.

Among these, from the perspectives of achieving superior heat resistance, workability, or dimensional stability and achieving excellent mechanical properties, tetramethylthiuram disulfide, tetraethylthiuram disulfide, and tetrabutylthiuram disulfide are preferred.

Examples of the thiazole-based vulcanization accelerator include dibenzothiazyldisulfide (DM), 2-mercaptobenzothiazole, and Zn salts thereof.

From the perspectives of achieving superior heat resistance, workability, or dimensional stability and achieving excellent mechanical properties, the content of the vulcanization accelerator is preferably 2.0 parts by mass or greater, and more preferably from 2.0 to 4.0 parts by mass, per 100 parts by mass of the EPDM (A).

Method for producing rubber composition

The production method of the composition according to an embodiment of the present invention is not particularly limited. For example, the composition according to an embodiment of the present invention can be produced by mixing, at 100 to 180°C, the essential components described above and optional components that can be used as necessary.

The composition according to an embodiment of the present invention may be a composition containing substantially no organic peroxide.

The organic peroxide means an organic compound having -O-O-.

In an embodiment of the present invention, "containing substantially no organic peroxide" means the content of the organic peroxide is from 0 to 1.0 mass% relative to the total amount of the composition according to an embodiment of the present invention.

Sulfur vulcanization of rubber composition

The method for sulfur-vulcanizing the composition according to an embodiment of the present invention is not particularly limited. For example, the sulfur vulcanization can be performed by subjecting the composition according to an embodiment of the present invention to press vulcanization, steam vulcanization, oven vulcanization (hot air vulcanization), or hot water vulcanization at 140 to 190°C.

When the composition according to an embodiment of the present invention is sulfur-vulcanized, even when the outer covering agent is repeatedly used for the composition according to an embodiment of the present invention, the resulting product achieves excellent dimensional stability.

The composition according to an embodiment of the present invention can be, for example, applied to a hose. The composition according to an embodiment of the present invention is preferably applied for an outer layer of a hose.

Examples of the hose include hoses for air conditioners (air conditioning devices), for power steering, and for hydraulics.

An example of a preferable aspect is one in which the composition according to an embodiment of the present invention is applied to an outer layer of a hose for an air conditioner of an automobile.

Hose

The hose according to an embodiment of the present invention is a hose formed by using the rubber composition according to an embodiment of the present invention.

The rubber composition used in the hose according to an embodiment of the present invention is not particularly limited as long as the rubber composition is the rubber composition according to an embodiment of the present invention (the composition according to an embodiment of the present invention).

Since the hose according to an embodiment of the present invention is formed by using the composition according to an embodiment of the present invention, excellent heat resistance, dimensional stability, and workability are achieved.

In the hose according to an embodiment of the present invention, the constituent member formed by using the composition according to an embodiment of the present invention is not particularly limited. In particular, from the perspective of achieving superior dimensional stability, an example of a preferable aspect is one in which an outer layer (outermost layer) of the hose according to an embodiment of the present invention is formed by using the composition according to an embodiment of the present invention.

Outer layer

The thickness of the outer layer can be from 0.2 to 4 mm.

Besides the outer layer, the hose according to an embodiment of the present invention may further have at least one selected from the group consisting of reinforcing members (reinforcing layers), inner layers, and intermediate rubber layers. The reinforcing member may have one layer or a plurality of layers. The same applies to the inner layer and the intermediate rubber layer.

Reinforcing member

The reinforcing member is not particularly limited. Examples thereof include known materials.

Examples of the material of the reinforcing member include metals and fiber materials (polyamides and polyesters). The reinforcing member may be surface-treated.

Examples of the form of the reinforcing member include those braided into a spiral structure and/or a braided structure.

Inner layer

The rubber composition that can form the inner layer is not particularly limited. For example, the composition according to an embodiment of the present invention may form the inner layer.

The thickness of the inner layer can be, for example, from 0.2 to 4 mm.

Intermediate rubber layer

The rubber composition that can form the intermediate rubber layer is not particularly limited. Examples thereof include known rubber compositions. The intermediate rubber layer may be formed by using the composition according to an embodiment of the present invention.

The intermediate rubber layer may be arranged, for example, in between an outer layer and a reinforcing member, in between an inner layer and a reinforcing member, or in between a reinforcing member and a reinforcing member.

The thickness of the intermediate rubber layer can be, for example, from 0.2 to 0.7 mm.

The hose according to an embodiment of the present invention can have, for example, an inner layer, a reinforcing member, and an outer layer in this order.

In the hose according to an embodiment of the present invention, the outer layer may be the outermost layer of the hose.

An example of a preferable aspect is one in which the hose according to an embodiment of the present invention has no reinforcing member on an outer face (outermost layer) of the hose.

A hose according to an embodiment of the present invention will be described while referring to the attached drawings. However, the present invention is not limited to the attached drawings.

FIG. 1 is a perspective view schematically illustrating a cut-away of each layer for an example of a hose according to an embodiment of the present invention.

In FIG. 1, a hose 1 has an inner layer 2, a reinforcing member 3 on the inner layer 2, and an outer layer 4 on the reinforcing member 3.

The outer layer 4 is preferably at least formed from the composition according to an embodiment of the present invention.

An example of the production method of the hose according to an embodiment of the present invention is a method of producing the hose according to an embodiment of the present invention by forming a laminate (unvulcanized hose) by laminating, on a mandrel, a rubber composition for forming an inner layer, a rubber composition for forming a reinforcing member and an outer layer (preferably the rubber composition according to an embodiment of the present invention) in this order, covering the laminate with an outer covering agent, and subjecting the laminate covered by the outer covering agent to vulcanization bonding by press vulcanization, steam vulcanization, oven vulcanization (hot air vulcanization), or hot water vulcanization at 140 to 190°C for 30 to 180 minutes.

Examples of the outer covering agent include polymethylpentene (e.g. trade name "TPX", available from Mitsui Chemicals, Inc.) and nylon.

Examples of the method for covering the outer covering agent on an unvulcanized hose include extrusion processing or a method by which a ribbon-like outer covering agent is wounded.

Examples of the use of the hose according to an embodiment of the present invention include uses for air conditioners (air conditioning devices), for power steering, and for hydraulics. An example of a preferable aspect is a hose for an air conditioner for an automobile.

Since the hose according to an embodiment of the present invention is formed by using the composition according to an embodiment of the present invention, an outer covering agent can be repeatedly used without being deteriorated, and dimension of the hose can be stably maintained even when the hose according to an embodiment of the present invention is produced by using the outer covering agent repeatedly.

Example

The present invention is described below in detail using examples but the present invention is not limited to such examples.

Production of the rubber composition

The components shown in Table 1 below were used in compositions (part by mass) shown in the same table and mixed by an agitator to produce each rubber composition.

Specifically, a mixture was obtained by first kneading the components shown in Table 1 below, except for the sulfur and the vulcanization accelerators, for 5 minutes in a 3.4-L Banbury mixer, and then discharging the kneaded product when the temperature reached 160°C. Then, the sulfur and the vulcanization accelerators were added to the mixture and kneaded by using an open roll to obtain each of the rubber compositions.

Production of vulcanized sheet

• Initial vulcanized sheet

Using a 153°C press molding machine, each of the rubber compositions obtained as described above was vulcanized for 45 minutes under a surface pressure of 3.0 MPa to produce an initial vulcanized sheet having a thickness from 2 mm or 6 mm.

• Vulcanized sheet after heat resistance test

The initial vulcanized sheet obtained as described above was subjected to a heat resistance test in which the initial vulcanized sheet was placed under conditions at 150°C for 168 hours to produce a vulcanized sheet after the heat resistance test.

Evaluation

The evaluation results are shown in Table 1 below.

• Heat resistance

•• Elongation at break ($E_b$)

From the initial vulcanized sheet or vulcanized sheet after the heat resistance test having a thickness of 2 mm obtained as described above, a test piece having a JIS No. 3 dumbbell shape was punched out. In accordance with JIS K 6251:2010, a tensile test was performed under conditions at room temperature and a tensile speed of 500 mm/min to measure elongation at break ($E_b$) of each of the initial vulcanized sheet and the vulcanized sheet after the heat resistance test.

•• $\Delta E_b$ (%)

By applying the elongation at break ($E_b$) of each of the initial vulcanized sheet and the vulcanized sheet after the heat resistance test measured as described above into the following equation, $\Delta E_b$ was calculated.

$$\Delta E_b\ (\%)$$
$$= [(E_b \text{ of vulcanized sheet after heat resistance test}) - (E_b \text{ of initial vulcanized}$$
$$\text{sheet})]/ E_b \text{ of initial vulcanized sheet} \times 100$$

In an embodiment of the present invention, the case where $\Delta E_b$ was - 70% or greater was evaluated as achieving excellent heat resistance. Furthermore, as $\Delta E_b$ was closer to 0, heat resistance was superior.

•• Hardness (HS)

By using the initial vulcanized sheet or vulcanized sheet after the heat resistance test having a thickness of 6 mm obtained as described above, the hardness of each of the vulcanized sheets (Shore A hardness, HS) was measured by using a durometer (type A) in accordance with JIS K 6253-3:2012.

•• $\Delta$HS

By applying the hardness (HS) of each of the initial vulcanized sheet and the vulcanized sheet after the heat resistance test measured as described above into the following equation, $\Delta$HS was calculated.

$$\Delta HS = (HS \text{ of vulcanized sheet after heat resistance test}) - (HS \text{ of initial}$$
$$\text{vulcanized sheet})$$

In an embodiment of the present invention, the case where $\Delta$HS was 8.5 point or less was evaluated as achieving excellent heat resistance. Furthermore, as $\Delta$HS was closer to 0, heat resistance was superior.

• Workability

Each of the rubber compositions (unvulcanized) produced as described above was extrusion-molded by using a circular die, in accordance with Die Dimension B of ASTM D 2230-96.
The extrusion molding conditions were as follows: screw rotation speed: 40 rpm; head temperature: 80°C; cylinder temperature: 70°C; and hopper temperature: 70°C.
The surface texture (surface condition) of each of the obtained extrusion molded product was observed, and the workability was evaluated by measuring die swell (%).

•• Surface texture

The surface texture (surface condition) of the obtained extrusion molded product was evaluated as below based on the limit samples of Die Dimension B of ASTM D 2230-96.
The case where the surface texture corresponded to the limit sample A was evaluated as "Excellent".
The case where the surface texture corresponded to the limit sample B was evaluated as "Good".
The case where the surface texture corresponded to the limit sample C was evaluated as "Somewhat poor".

The case where the surface texture corresponded to the limit sample D or E was evaluated as "Poor".

In an embodiment of the present invention, the case where the evaluation result of the surface texture was "Excellent" or "Good", excellent (extrusion) workability was achieved. The case of "Excellent" achieved superior (extrusion) workability.

The case where the evaluation result of the surface texture was "Somewhat poor" exhibited somewhat poor (extrusion) workability. The case where the evaluation result of the surface texture was "Poor" exhibited extremely poor (extrusion) workability.

•• Die swell (%)

The die swell (%) was calculated by the following equation.

$$\text{Die swell (\%)} = (W/l\rho S_o - 1) \times 100 \text{ (W and } l \text{ are respectively the mass}$$
$$\text{and the length of each of the rubber compositions produced as described above,}$$
$$\rho \text{ is the specific gravity, and } S_o \text{ is the area of the die)}$$

In an embodiment of the present invention, the case where the die swell was 50% or less was evaluated as achieving excellent (extrusion) workability. Furthermore, a smaller die swell indicated superior (extrusion) workability.

• Evaluation of dimensional stability when outer covering agent was used repeatedly

•• Preparation of initial unvulcanized sheet

Each of the rubber compositions obtained as described above was formed into an initial unvulcanized sheet having a thickness of 2 mm by using a press molding machine.

•• Evaluation method

Each of the initial unvulcanized sheets (thickness: 2 mm) obtained as described above and a sheet of polymethylpentene (TPX, available from Mitsui Chemicals, Inc.; thickness: 2 mm; hereinafter, this is referred to as "TPX") were adhered and vulcanized by press vulcanization under the condition at 148°C for 45 minutes to obtain each laminate. This formation of the laminate corresponded to the first use of the TPX.

Thereafter, only the TPX was removed from each of the laminate, and the removed TPX was pulverized into pellet shape and dried under the condition at 90°C for 2 hours.

The TPX after the drying was melted and extruded by using a capillary rheometer (DD (inner diameter of the capillary die) = 1.0 mm, L (length of the capillary die)/DD = 10) in accordance with JIS K 7199:1999 at the test temperature of 240°C and the shear speed of 240 sec$^{-1}$, and the surface conditions (extrusion texture) of the TPX after the extrusion were visually observed. The extrusion by the capillary rheometer corresponded to the second use of the TPX.

Using an unused polymethylpentene sheet, in accordance with JIS K 7199:1999, the surface conditions (extrusion texture) of the TPX after the extrusion by the capillary rheometer were visually observed.

•• Evaluation criteria

For the unused TPX and the TPX removed from the laminate (removed TPX), the surface conditions after the extrusion (extrusion texture) were compared.

The case where, after the extrusion by the capillary rheometer, the extrusion texture of the removed TPX was as smooth as the extrusion texture of the unused TPX was evaluated as achieving excellent dimensional stability and indicated as "Good".

The case where recesses and protrusions were observed on the surface of the extrusion texture of the removed TPX was evaluated as exhibiting poor dimensional stability and indicated as "Poor".

[Table 1]

| Table 1 | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| EPDM (a2-1) (ESPRENE 505, vanadium catalyst) | | 50.00 | 50.00 | | | 100.00 | 50.00 | | |
| EPDM (al-1) (Vistalon 5601, metallocene catalyst) | | 50.00 | 50.00 | 100.00 | 100.00 | | 50.00 | 100.00 | 100.00 |
| Carbon black (GPF) | | 90.00 | 90.00 | 90.00 | 90.00 | 90.00 | 90.00 | 90.00 | 90.00 |
| Zinc oxide | | 5.00 | 5.00 | 5.00 | 5.00 | 5.00 | 5.00 | 5.00 | 5.00 |
| Stearic acid | | 1.00 | 1.00 | 1.00 | 1.00 | 1.00 | 1.00 | 1.00 | 1.00 |
| Vulcanization retarder (PVI) | | 0.30 | 0.30 | 0.30 | 0.30 | 0.30 | 0.30 | 0.30 | 0.30 |
| Plasticizer (paraffin oil) | | 30.00 | 30.00 | 30.00 | 30.00 | 30.00 | 30.00 | 30.00 | 30.00 |
| EPM 1 (LUCANT LX900Z) | | 7.50 | 15.00 | 7.50 | 15.00 | | | | |
| Comparative EPM (TRILENE CP80) | | | | | | | | | 20.00 |
| Sulfur | | 0.80 | 0.80 | 0.80 | 0.80 | 0.80 | 0.80 | 0.80 | |
| Organic peroxide | | | | | | | | | 5.00 |
| Vulcanization accelerator 1 (TT) | | 1.50 | 1.50 | 1.50 | 1.50 | 1.50 | 1.50 | 1.50 | |
| Vulcanization accelerator 2 (DM) | | 2.00 | 2.00 | 2.00 | 2.00 | 2.00 | 2.00 | 2.00 | |
| HEAT RESISTANCE 150°C × 168 hrs | $\Delta E_b$ (%) | -65.0 | -67.0 | -55.0 | -60.0 | -71.0 | -65.0 | -48.0 | -48.0 |
| | $\Delta$HS(pt) | 8.0 | 8.0 | 7.0 | 7.0 | 10.0 | 8.5 | 7.0 | 7.0 |
| Workability | Surface texture | Excellent | Excellent | Good | Excellent | Good | Somewhat poor | Poor | Poor |
| | Die swell (%) | 46.0 | 40.0 | 42.0 | 26.0 | 52.0 | 56.0 | 53.0 | 53.0 |
| Dimensional stability when outer covering agent was used repeatedly | | Good | Good | Good | Good | Good | Good | Good | Poor |

Details of the components described in Table 1 are as follows.

- EPDM (a2-1): An ethylene-propylene-diene copolymer obtained by using a vanadium catalyst (corresponded to the catalyst other than the metallocene catalyst); trade name: ESPRENE 505, available from Sumitomo Chemical Co., Ltd.; Mooney viscosity (ML$_{1+4}$, 125°C): 59; the content of the repeating unit obtained by diene (ethylidene norbornene) is 10.0 mass% of the amount of the EPDM (a2-1); and the content of the repeating unit obtained by ethylene is 50.0 mass% of the amount of the EPDM (a2-1)
- EPDM (a1-1): An ethylene-propylene-diene copolymer obtained by a metallocene catalyst; trade name: Vistalon 5601, available from ExxonMobil Corporation; Mooney viscosity (ML$_{1+4}$, 125°C): 72; the content of the repeating unit obtained by diene (ethylidene norbornene) is 5.0 mass% of the amount of the EPDM (a1-1); and the content of the repeating unit obtained by ethylene is 69.0 mass% of the amount of the EPDM (a1-1)
- Carbon black (GPF): Carbon black; trade name: Niteron #GN (available from NSCC Carbon Co., Ltd.); GPF carbon black
- Zinc oxide: Trade name: Zinc Oxide III (available from Seido Chemical Industry Co., Ltd.)
- Stearic acid: trade name: stearic acid 50S (available from Chiba Fatty Acid Co., Ltd.)
- Vulcanization retarder (PVI): N-cyclohexylthiophthalimide; trade name: Retarder CTP, available from Toray Fine Chemicals Co., Ltd.
- Plasticizer (paraffin oil): Paraffin oil; trade name: SUNPAR 2280 (available from Japan Sun Oil Company, Ltd.)
- EPM 1 (LUCANT LX900Z): An ethylene-propylene copolymer having a weight average molecular weight of 20000; trade name: LUCANT LX900Z, available from Mitsui Chemicals, Inc.
- Comparative EPM (TRILENE CP80): An ethylene-propylene copolymer having a weight average molecular weight of 38000; trade name: TRILENE CP80, available from Lion Elastomers
- Sulfur: Powder sulfur, available from Hosoi Chemical Industry Co., Ltd.
- Organic peroxide: Perkadox 14-40C (calcium carbonate: 60 wt%), available from Kayaku Akzo Corporation
- Vulcanization accelerator 1 (TT): Tetramethylthiuram disulfide (thiuram-based; NOCCELER TT, available from Ouchi Shinko Chemical Industrial Co., Ltd.)
- Vulcanization accelerator 2 (DM): Dibenzothiazyldisulfide (thiazole-based; Sanceller DM, available from Sanshin Chemical Industry Co., Ltd.)

As is clear from the results shown in Table 1, Comparative Example 1, which contained no predetermined EPDM (a1) but, instead, contained the EPDM obtained by a vanadium catalyst and contained no predetermined EPM, exhibited poor heat resistance and workability.

Comparative Examples 2 to 3, which contained no predetermined EPM, exhibited poor workability.

Comparative Example 4, which contained no predetermined EPM but, instead, contained the comparative EPM having a weight average molecular weight that was outside of the predetermined range, and contained no sulfur but, instead, contained an organic peroxide, exhibited poor workability and dimensional stability.

On the other hand, the compositions according to embodiments of the present invention achieved excellent heat resistance, processability, and dimensional stability.

Reference Signs List

1 Hose
2 Inner layer
3 Reinforcing member
4 Outer layer

**Claims**

1.  A rubber composition comprising:

    an ethylene-propylene-diene copolymer (A) containing an ethylene-propylene-diene copolymer (a1) obtained by using a metallocene catalyst;
    an ethylene-propylene copolymer having a weight average molecular weight of 35000 or less; and
    sulfur.

2. The rubber composition according to claim 1, wherein a content of the ethylene-propylene copolymer is from 5 to 30 parts by mass per 100 parts by mass of the ethylene-propylene-diene copolymer (A).

3. The rubber composition according to claim 1 or 2, further comprising a plasticizer,
   a content of the plasticizer being 15 parts by mass or greater per 100 parts by mass of the ethylene-propylene-diene copolymer (A).

4. The rubber composition according to any one of claims 1 to 3, wherein a content of a diene repeating unit constituting the ethylene-propylene-diene copolymer (a1) is 8 mass% or less of an amount of the ethylene-propylene-diene copolymer (a1).

5. The rubber composition according to any one of claims 1 to 4, wherein a content of an ethylene repeating unit constituting the ethylene-propylene-diene copolymer (a1) is greater than 60 mass% of the amount of the ethylene-propylene-diene copolymer (a1).

6. The rubber composition according to any one of claims 1 to 5, wherein the weight average molecular weight of the ethylene-propylene copolymer is from 5000 to 25000.

7. The rubber composition according to any one of claims 1 to 6, wherein a content of the sulfur is from 0.3 to 1.5 parts by mass per 100 parts by mass of the ethylene-propylene-diene copolymer (A).

8. The rubber composition according to any one of claims 1 to 7, wherein a content of the ethylene-propylene-diene copolymer (a1) in 100 parts by mass of the ethylene-propylene-diene copolymer (A) is from 40 to 100 mass%.

9. The rubber composition according to any one of claims 1 to 8, wherein the rubber composition is used for a hose.

10. A hose formed by using the rubber composition described in any one of claims 1 to 9.

FIG. 1

## INTERNATIONAL SEARCH REPORT

| | International application No. |
|---|---|
| | PCT/JP2018/041560 |

**A. CLASSIFICATION OF SUBJECT MATTER**
Int.Cl. C08L23/16(2006.01)i, C08K3/06(2006.01)i, F16L11/08(2006.01)i

According to International Patent Classification (IPC) or to both national classification and IPC

**B. FIELDS SEARCHED**

Minimum documentation searched (classification system followed by classification symbols)
Int.Cl. C08L23/00-23/36, C08K3/00-13/08, F16L11/00-11/26

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/072553 A1 (MITSUI CHEMICALS, INC.) 11 June 2009, claims 1, 2, 4, 5, 11-14, 19-21, paragraphs [0042]-[0043], [0081], [0090], [0096], [0099], [0126], [0175], [0179], [0207], [0215], examples I, II & US 2009/0239014 A1 & EP 2221338 A1, claims 1, 2, 4, 5, 11-14, 19-21, paragraphs [0042]-[0043], [0082], [0091], [0097], [0100], [0129], [0181], [0185], [0214], [0222], examples I, II & KR 10-2010-0100905 A & CN 101883819 A | 1-10 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 January 2019 (30.01.2019) | 12 February 2019 (12.02.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/041560

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2015-189870 A (MITSUI CHEMICALS, INC.) 02 November 2015, claim 1, paragraphs [0030], [0050], [0057], [0076]-[0078], [0081], [0099]-[0104], table 1, examples 1-6, comparative examples 1, 2, 4, 5, tables 2, 3 (Family: none) | 1-10 |
| X | JP 2015-189865 A (TOYOTA GOSEI CO., LTD.) 02 November 2015, claims 1, 2, 4, paragraph [0037], fig. 1(b), example 7, comparative example 3, table 1 & US 2015/0275053 A1 claims 1, 2, 5, 6, paragraph [0054], fig. 1B, example 7, comparative example 3, table 1 & GB 2526415 A & CN 104945745 A | 1-3, 6-10 |
| T | 三井 EPT 9090M 技術資料,　三井化学株式会社 [オンライン], 2018, [retrieval date 29 January 2019], Internet : <URL:https://www.mitsuichem.com/sites/default/files/media/document/2018/9090m.pdf>, non-official translation (MITSUI EPT, "9090M technical data", MITSUI CHEMICALS, INC. [online]) | 1-10 |
| A | NO 2007/060843 A1 (MITSUI CHEMICALS, INC.) 31 May 2007, paragraph [0056] & US 2009/0171006 A1 paragraph [0067] & EP 1964883 A1 & CN 101309960 A & KR 10-2008-0077229 A | 1-10 |

Form PCT/ISA/210 (continuation of second sheet) (January 2015)

**EP 3 708 611 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11292236 A